# DEMANDE DE BREVET EUROPEEN

(11) **EP 1 985 592 A1**
(43) Date de publication de la demande: **29.10.2008**
(21) Numéro de dépôt: 07107026.2
(22) Date de dépôt: 26.04.2007
(51) Int. Cl.: C03C 14/00

(54) **Article en verre à résistance chimique améliorée**

(71) Demandeur: AGC Flat Glass Europe SA, 1170 Bruxelles (BE)
(72) Inventeur: La désignation de l'inventeur n'a pas encore été déposée
(74) Mandataire: Decamps, Alain René François

(57) **Abrégé**

Article en verre à résistance chimique améliorée comprenant un agent de renforcement sous forme d'inclusions de nanoparticules, notamment partiellement cristallisées, dans la masse du verre proche d'une surface de l'article.

Procédé pour fabriquer un tel article par génération de nanoparticules dans une flamme à partir de précurseurs et projection sur une surface de l'article à renforcer.

## Description

La présente invention concerne un article en verre dont la résistance chimique est élevée et améliorée par rapport aux articles en verre connus.

Il est connu que le verre, lorsqu'il n'a pas fait l'objet d'un traitement de protection, peut se corroder sous l'influence de conditions environnementales défavorables, en particulier dans les milieux aqueux de pH alcalins. Lorsque le verre est du type sodo-calcique, les cations de métaux alcalins alcalins tels que Na⁺ et, dans une moindre mesure, K⁺, lorsqu'ils sont proches de la surface du verre, peuvent quitter celui-ci et se dissoudre dans le milieu environnant, par exemple en présence d'humidité et d'eau de ruissellement. Pour limiter ce phénomène, diverses méthodes ont été proposées, comme par exemple, un traitement de déplétion de ces ions au voisinage de la surface de l'article en verre. Cette méthode consiste à traiter la surface du verre avec un agent chimique capable d'éliminer ou de réduire fortement la teneur en sodium et/ou potassium dans une zone mince voisine de cette surface.

L'efficacité de cette technique est cependant limitée dans le temps, étant donné le phénomène de diffusion lente des ions Na⁺ et K⁺ en provenance du coeur de l'article en verre, phénomène causé par le gradient de concentration créé par le traitement de déplétion de ces ions au voisinage de la surface.

L'invention remédie à ces inconvénients en fournissant un verre à résistance chimique améliorée qui soit stable dans des conditions environnementales diverses, éventuellement en milieux aqueux alcalins, ne nécessite plus de traitement particulier de déplétion en ions Na⁺ et/ou K⁺ et soit durable pour des périodes d'utilisation prolongées.

A cet effet, l'invention concerne un article en verre tel que défini dans la revendication 1.

Les revendications dépendantes définissent d'autres formes possibles de réalisation de l'invention, dont certaines sont préférées.

L'article en verre selon l'invention est formé d'un verre de type inorganique pouvant appartenir à diverses catégories. Le verre inorganique peut ainsi être un verre sodo-calcique, un verre au bore, un verre au plomb, un verre comprenant un ou plusieurs additifs répartis de manière homogène dans sa masse, tels que, par exemple, au moins un colorant inorganique, un composé oxydant, un agent régulateur de la viscosité et/ou un agent facilitant la fusion. Le verre inorganique peut aussi avoir subi une trempe thermique destinée à améliorer sa dureté en surface. De préférence, l'article en verre selon l'invention est formé d'un verre sodo-calcique clair ou coloré dans la masse. L'expression "verre sodo-calcique" est utilisée ici dans son sens large et concerne tout verre qui contient les composants de base suivants (exprimés en pourcentages en poids total de verre) :

| | |
|---|---|
| SiO₂ | 60 à 75 % |
| Na₂O | 10 à 20 % |
| CaO | 0 à 16 % |
| K₂O | 0 à 10 % |
| MgO | 0 à 10 % |
| Al₂O₃ | 0 à 5 % |
| BaO | 0 à 2 % |
| BaO + CaO + MgO | 10 à 20 % |
| K₂O + Na₂O | 10 à 20 %. |

Elle désigne aussi tout verre comprenant les composants de base précédents qui peut comprendre en outre un ou plusieurs additifs.

Généralement, on préfère aussi que l'article en verre n'ait pas fait l'objet d'un recouvrement par une couche quelconque, tout au moins sur la surface dont on désire améliorer la résistance chimique.

L'article en verre selon l'invention possède une résistance chimique améliorée. On entend désigner par là une résistance aux agents chimiques meilleure que celle des verres connus. Par agents chimiques, on comprend les agents atmosphériques tels que l'eau de pluie comprenant éventuellement des polluants habituellement rencontrés dans l'atmosphère, à l'état dissous ou de suspension, de même que certaines solutions synthétiques, notamment aqueuses, comprenant des agents chimiques d'alcalinisation, d'acidification et/ou d'oxydoréduction en présence éventuelle de solvants organiques ou inorganiques divers. La résistance de l'article selon l'invention se manifeste par une absence de corrosion ou de perte de poids sous l'influence prolongée des agents chimiques pour des durées pouvant s'étaler sur plusieurs années ou, tout au moins, une réduction importante de cette corrosion ou perte de poids jusqu'à des valeurs insignifiantes pour l'usage de l'article.

Selon l'invention, l'article en verre comprend au moins un agent de renforcement. Cet agent de renforcement est une composition chimique qui peut renfermer des composants totalement étrangers à la composition de la masse du verre de l'article. Il peut aussi, en variante, comprendre au contraire, un ou plusieurs composés chimiques déjà présent dans la composition de la masse du verre de l'article.

Selon l'invention, l'agent de renforcement est formé d'inclusions de nanoparticules. Les inclusions sont des amas d'agent de renforcement que l'on retrouve sous la surface du verre de l'article, à distance proche de celle-ci. Les nanoparticules ont des dimensions allant de 2 nm à 200 nm et, de préférence, de 10 à 100 nm. Les inclusions peuvent être formées d'un assemblage de plusieurs nanoparticules ou, au contraire, constituer chacune une nanoparticule isolée. Chaque nanoparticule est formée d'un seul composé chimique d'agent de renforcement. Elle peut aussi, en variante, être formée d'une composition de plusieurs agents de renforcement différents. Dans ce dernier cas, la composition n'est pas nécessairement homogène.

Selon une caractéristique préférée de l'invention, les inclusions de nanoparticules sont au moins partiellement cristallisées, c'est-à-dire qu'elles comprennent au moins une proportion de 5 % de leur poids constituée par des cristaux. Les cristaux peuvent appartenir à plusieurs systèmes de cristallisation différents. En variante, ils peuvent aussi être tous du même système de cristallisation. De préférence, au moins 50 % du poids des inclusions est sous une forme cristallisée. De manière tout particulièrement préférée, la totalité des inclusions est sous la forme cristallisée.

Selon une autre caractéristique préférée de l'article selon l'invention, les inclusions sont constituées d'au moins un composé inorganique. Selon cette caractéristique, chaque nanoparticule est constituée par au moins un composé chimique inorganique d'agent de renforcement. Tout composé chimique inorganique qui annule ou diminue la corrosion ou la perte de poids de l'article en verre peut convenir.

On préfère cependant, d'une manière générale que dans l'article en verre selon l'invention, le composé chimique inorganique constituant les nanoparticules soit choisi parmi les oxydes, les nitrures, les carbures et les associations d'au moins deux oxydes et/ou nitrures et/ou carbures.

De manière plus préférée encore, on sélectionne le composé inorganique parmi les oxydes, les nitrures et les carbures d'aluminium, de silicium, de germanium, d'étain, de gallium, de titane, de zirconium, de vanadium, de niobium, de tantale et les associations d'au moins deux de ces composés.

Parmi ces composés, l'oxyde d'aluminium et l'oxyde de silicium ont donné d'excellents résultats. L'oxyde d'aluminium^{III} (Al₂O₃) utilisé seul, s'est révélé être un agent de renforcement très intéressant. De même, l'oxyde de silicium^{IV} (SiO₂) employé seul a aussi fourni un verre efficacement renforcé par des nanoparticules.

Selon une caractéristique particulière de l'article selon l'invention, la forme des inclusions est quasi sphérique. Par quasi sphérique, on désigne une forme tridimensionnelle dont le volume se rapproche de celui d'une sphère dont le diamètre serait égal à la plus grande dimension d'un objet ayant cette forme quasi sphérique. On préfère que les inclusions aient un volume égal à au moins 80 % de celui de la sphère de diamètre égal à la plus grande dimension des inclusions.

Selon une autre caractéristique particulière de l'article selon l'invention, la taille des inclusions est comprise entre 50 et 350 nm. Par taille on entend désigner la plus grande dimension des inclusions.

Selon une première forme de réalisation particulière de l'invention, la concentration en composé inorganique se répartit dans la profondeur du verre selon un profil qui présente un pic maximum à une distance de la surface comprise entre 5 et 100 nm. De préférence, le pic maximum en composé inorganique est situé à une distance comprise entre 30 et 90 nm de la surface.

Selon cette première forme de réalisation, le profil de concentration en composé inorganique présente le plus souvent, à partir d'une concentration correspondant à celle du pic et en direction du coeur de l'article, une décroissance monotone continue qui tend vers zéro ou vers une valeur constante identique à la concentration éventuellement présente dans le coeur à partir d'une profondeur comprise entre une distance de 600 à 2000 nm de la surface.

Selon une deuxième forme de réalisation particulière de l'invention, la concentration en composé inorganique peut également se répartir dans la profondeur du verre selon un profil qui décroît continûment de façon monotone à partir de la surface du verre et tend vers zéro ou une valeur constante identique à la concentration éventuellement présente dans le coeur de l'article à partir d'une profondeur comprise entre une distance de 400 à 2000 nm de la surface.

Selon une autre forme de réalisation de l'article conforme à l'invention, qui est compatible avec toutes les formes et caractéristiques particulières décrites plus haut, le verre de l'article est constitué d'une feuille de verre plat de type sodo-calcique.

L'article selon l'invention peut être obtenu par tout procédé capable de générer et d'incorporer des nanoparticules à sa surface, sous la forme d'inclusions.

En particulier, l'invention concerne un article conforme aux descriptions qui précède et qui est obtenu par un procédé dans lequel les nanoparticules sont générées directement dans une flamme à partir de précurseurs et sont ensuite projetées sur une surface de l'article. Le précurseur peut être solide, liquide ou gazeux. Des précurseurs liquides ont donné de bons résultats.

L'invention s'adresse aussi à un procédé pour fabriquer un article en verre à résistance chimique améliorée conforme à l'invention, caractérisé en ce qu'on génère des nanoparticules dans une flamme à partir de précurseurs et qu'on projette ces nanoparticules sur une surface d'un article en verre, à pression ambiante.

Dans ce procédé, tous les termes spécifiques ont la même définition que celle donnée plus haut dans la description de l'article en verre.

Dans ce procédé, la surface de l'article de verre peut être chauffée préalablement à la projection des nanoparticules. La température de cette surface peut être comprise entre 500 et 800 °C. De préférence cette température est de 580 à 720°C.

## Revendications

1. Article en verre à résistance chimique améliorée comprenant au moins un agent de renforcement dans la masse du verre proche d'une surface de l'article, **caractérisé en ce que** l'agent de renforcement est formé d'inclusions de nanoparticules.

2. Article selon la revendication précédente, **caractérisé en ce que** les inclusions de nanoparticules sont au moins partiellement cristallisées.

3. Article selon la revendication précédente, **caractérisé en ce que** les inclusions de nanoparticules sont totalement cristallisées.

4. Article selon une quelconque des revendications précédentes, **caractérisé en ce que** les inclusions sont constituées d'au moins un composé inorganique.

5. Article selon la revendication précédente, **caractérisé en ce que** le composé inorganique est sélectionné parmi les oxydes, les nitrures, les carbures et les associations d'au moins deux oxydes et/ou nitrures et/ou carbures.

6. Article selon la revendication précédente, **caractérisé en ce que** le composé inorganique est sélectionné parmi les oxydes, les nitrures et les carbures d'aluminium, de silicium, de germanium, d'étain, de gallium, de titane, de zirconium, de vanadium, de niobium, de tantale et les associations d'au moins deux de ces composés.

7. Article selon la revendication précédente, **caractérisé en ce que** le composé inorganique est un oxyde d'aluminium^{III}.

8. Article selon la revendication 6, **caractérisé en ce que** le composé inorganique est un oxyde de silicium^{IV}.

9. Article selon une quelconque des revendications précédentes, **caractérisé en ce que** la forme des inclusions est quasi sphérique.

10. Article selon une quelconque des revendications précédentes, **caractérisé en ce que** la taille des inclusions est comprise entre 10 et 400 nm.

11. Article selon la revendication précédente, **caractérisé en ce que** la taille des inclusions est comprise entre 50 et 350 nm.

12. Article selon une quelconque des revendications précédentes, **caractérisé en ce que** la concentration en composé inorganique se répartit dans la profondeur du verre selon un profil qui présente un pic maximum à une distance de la surface comprise entre 5 et 100 nm.

13. Article selon la revendication précédente, **caractérisé en ce que** le pic maximum en composé inorganique est situé à une distance comprise entre 30 et 90 nm de la surface.

14. Article selon une quelconque des revendications 12 et 13, **caractérisé en ce que** le profil de concentration en composé inorganique présente, à partir d'une concentration correspondant à celle du pic en direction du coeur de l'article, une décroissance monotone continue qui tend vers zéro ou vers une valeur constante identique à la concentration éventuellement présente dans le coeur à partir d'une profondeur comprise entre une distance de 600 à 2000 nm de la surface.

15. Article selon une quelconque des revendications 1 à 11, **caractérisé en ce que** la concentration en composé inorganique se répartit dans la profondeur du verre selon un profil qui décroît continûment de façon monotone à partir de la surface du verre et tend vers zéro ou vers une valeur constante identique à la concentration éventuellement présente dans le coeur de l'article à partir d'une profondeur comprise entre une distance de 400 à 2000 nm de la surface.

16. Article selon une quelconque des revendications précédentes, **caractérisé en ce qu'**il est obtenu par un procédé dans lequel les nanoparticules sont générées directement dans une flamme à partir de précurseurs et sont ensuite projetées sur une surface de l'article.

17. Article selon une quelconque des revendications précédentes, **caractérisé en ce que** le verre de l'article est constitué d'une feuille de verre plat de type sodo-calcique.

18. Procédé pour fabriquer un article en verre à résistance chimique améliorée selon une quelconque des revendications précédentes, **caractérisé en ce qu'**on génère des nanoparticules dans une flamme à partir de précurseurs et qu'on projette ces nanoparticules sur une surface d'un article en verre, à pression ambiante.
